# EUROPÄISCHE PATENTSCHRIFT

(11) **EP 0 597 217 B1**
(45) Veröffentlichungstag und Bekanntmachung des Hinweises auf die Patenterteilung: **20.03.1996**
(21) Anmeldenummer: 93115080.9
(22) Anmeldetag: 20.09.1993
(51) Int. Cl.: F16B 13/14, E21D 20/02

(54) **Verbundanker**
Compound anchor
Dispositif d'ancrage composite

(30) Priorität: 12.11.1992 DE 4238177
(43) Veröffentlichungstag der Anmeldung: 18.05.1994
(73) Patentinhaber: fischerwerke Artur Fischer GmbH & Co. KG, D-72178 Waldachtal (DE)
(72) Erfinder: Fischer, Artur, Prof. Dr. h. c., D-72178 Waldachtal 3/Tumlingen (DE); Haug, Willi, D-72250 Freudenstadt (DE)

(56) Entgegenhaltungen:
- EP-A- 0 005 969
- EP-A- 0 005 987
- EP-A- 0 163 019
- FR-A- 2 537 988
- GB-A- 1 293 619
- US-A- 5 073 064

## Beschreibung

Die Erfindung betrifft einen Verbundanker, bestehend aus einer Ankerstange und einer mit den beiden Komponenten eines aushärtbaren Bindemittels gefüllten und zerstörbaren Patrone gemäß dem Gattungsbegriff des Anspruches 1, (GB-A-1 293 619).

Ein aus der EP-A-502 348 bekannte Patrone für einen Verbundanker weist als eine Komponente einen mineralischen Mörtel und als andere Komponente Wasser auf, das sich in einem Innenbehälter befindet, der über die Länge der Patrone verteilt angeordnete und beim Eintreiben der Ankerstange einzeln zerstörbare Behälterteile aufweist. Mit dieser Aufteilung der Wasserkomponente auf die gesamte Länge der Patrone soll erreicht werden, daß der Mörtel gleichmäßig mit Wasser getränkt und somit eine gute Vermengung und optimale Aushärtung erreicht wird. Die bekannte Lösung setzt einen sehr aufwendig gestalteten Innenbehälter bzw. mehrere gleichmäßig verteilte und mit Wasser zu befüllende Kleinbehälter auf, die unter Umständen noch mit Positionierungshilfsmitteln in der Patrone zu verteilen sind. Trotz dieser sehr aufwendigen Gestaltung der bekannten Patrone ist es dennoch nicht auszuschließen, daß eine ungleichmäßige Verteilung der Wasserkomponente eintritt und zumindest beim Ansetzen der Ankerstange ein Teil des Wassers abfließen kann. Als Folge ergibt sich eine unvollständige Durchmischung des Binddemittels, die schon bei horizontalem Bohrungsverlauf, verstärkt jedoch bei der Überkopfmontage, zu erwarten ist. Dadurch ergeben sich erhebliche Streuwerte bei den Haltewerten der Ankerstange, die ein entsprechendes Sicherheitsrisiko darstellen.

Der Erfindung liegt die Aufgabe zugrunde, einen Verbundanker der eingangs genannten Art dahingehend zu verbessern, daß bei einfacher Gestaltung des Innenbehälters eine gleichmäßige Durchmischung des Bindemittels in jeder Lage des Bohrloches ermöglicht wird.

Erfindungsgemäß wird diese Aufgabe durch die im Anspruch 1 angegebenen Merkmale erreicht. Durch das Thixotropiermittel in der Wasserkomponente ist diese pastös, so daÛ7 bei der Zerstörung der Patrone die Wasserkomponente unabhängig vom Verlauf des Bohrloches nicht abfließen kann. Durch die von der drehenden Ankerstange beim Einschieben in das Bohrloch ausgehenden Scherkräfte wird die Wasserkomponente entsprechend dem Fortschritt der Ankerstange verflüssigt, so daß eine gleichmäßige Tränkung und Durchmischung des Bindemittels erfolgt. In der teigartigen Mischung ist sowohl der pulverförmige Mörtel als auch das Wasser gebunden, so daß ein Ausfließen einer der beiden Komponenten aus dem Bohrloch während des Mischvorganges auch bei einer Überkopfmontage nicht zu befürchten ist. Die homogene Vermengung der beiden Komponenten bewirkt hohe Haltekräfte der Ankerstange nach dem Aushärten des Bindemittels.

Durch Verwendung von anorganischen Stoffen sowohl für die Patrone als auch für die beiden Komponenten des Bindemittels ergibt sich ein ökologisch unbedenkliches Produkt, das auch allen Anforderungen der Brandsicherheit entspricht. Des weiteren kann als Innenbehälter ein durch Zuschmelzen verschließbarer einfacher Glaszylinder verwendet werden, so daß die gesamte Verankerungspatrone kostengünstig herstellbar ist.

Als Thixotropiermittel hat sich amorphe, pyrogene Kieselsäure als besonders geeignet erwiesen, die der Wasserkomponente mit einem Anteil von 0,5 % bis 10 % zugemischt wird. Zur Sicherstellung einer gleichmäßigen Verteilung der Wasserkomponente beim Mischvorgang ist es zweckmäßig, die Wasserkomponente in den Innenbehälter zu füllen und die Länge des Innenbehälters der Länge des Innenraums der Patrone anzupassen.

In Verbindung mit der erfindungsgemäßen Patrone ist es ferner zweckmäßig, eine Ankerstange zu verwenden, die an ihrem dem Bohrloch zugewandten Ende einen zum Ende sich erweiternden Spreizkonus aufweist und von einer mittels des Spreizkonus aufweitbaren Ankerhülse umschlossen ist. Bei einer auf die Ankerstange wirkenden Zugbelastung wird der Spreizkonus in die fest im Bohrloch eingebundene Ankerhülse eingezogen, so daß über den an der Ankerstange angeordneten Spreizkonus zusätzlich Spreizkräffe in der Bohrlochtiefe entstehen. Dadurch werden auf den im Bohrloch ausgehärteten Mörtelkern lediglich Druckkrätte wirksam, die zu einer Erhöhung der Haltewerte, insbesondere auch bei gerissenem Beton, beitragen. Der erfindungsgemäße Verbundanker ist somit auch für einen Einsatz in der Zugzone geeignet.

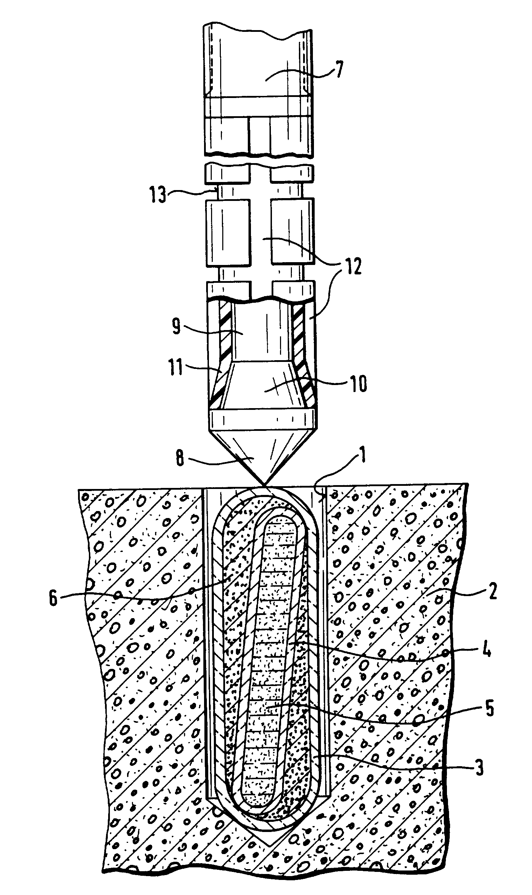

Die Erfindung wird anhand eines in der Zeichnung dargestellten Ausführungsbeispieles näher erläutert.

In dem Bohrloch 1 des Bauteiles 2 ist die aus Glas bestehende Patrone 3 eingesetzt. In der Patrone 3 befindet sich ein ebenfalls aus Glas bestehender Innenbehälter 4, der etwa die Länge der Außenpatrone 3 besitzt. Im Innenbehälter 4 befindet sich die Wasserkomponente 5, die mit einem Thixotropiermittel, beispielsweise amorphe, pyrogene Kieselsäure, zu einer Paste eingedickt ist. Dies wird durch einen Kieselsäureanteil von 0,5 % bis 10% erreicht. In der Außenpatrone ist der mineralische Mörtel 6 als zweite Komponente des Bindemittels eingefüllt. Beide Patronen sind durch Zuschmelzen ihres offenen Endes geschlossen.

Die Zerstörung der beiden Patronen und die Freisetzung der Komponenten des Bindemittels erfolgt durch die Ankerstange 7, die zu diesem Zweck eine Keilspitze 8 aufweist. Die mit einer Bohrmaschine in das Bohrloch eingedrehte Ankerstange 7 erzeugt Scherkräfte, die das thixotrop eingestellte Wasser entsprechend dem Ankerstangenvorschub verflüssigen. Damit entsteht sofort eine teigartige Mischung des Bindemittels, die ein Wegfließen, insbesondere der Wasserkomponente, verhindert. Somit ist es möglich, den Verbundanker auch in Überkopfmontage zu setzen.

Die Ankerstange 7 wird bis annähernd zum Bohrlochgrund eingedreht, so daß die gesamte Patrone zerstört und die Komponenten des Bindemittels mit den Glassplittern der beiden Patronen vollständig durchmischt sind. Nach dem Aushärten des Bindemittels ist die Ankerstange 7 fest im Bohrloch 1 des Bauteiles 2 eingebunden.

Die im Ausführungsbeispiel dargestellte Ankerstange 7 weist einen reduzierten Abschnitt 9 auf, an dessen dem Bohrloch zugewandten Ende sich ein Spreizkonus 10 anschließt. Dieser Spreizkonus 10 sowie der reduzierte Abschnitt 9 wird von einer beispielsweise aus Kunststoff bestehenden Ankerhülse 11 umschlossen. Die Ankerhülse 11 weist zur besseren Einbindung im Bohrloch Längsrillen 12 und in größeren Abständen umlaufende Rillen 13 auf. Durch eine nach der Verankerung an der Ankerstange 7 angreifenden Zugkraft wird der Spreizkonus 10 in die Ankerhülse 11, insbesondere bei einer Bohrlocherweiterung durch Rißbildung, eingezogen, so daß zusätzlich auf die Ankerhülse 11 wirkende Spreizkräfte entstehen. Durch diese Spreizkräfte wird die Ankerhülse gegen die Bohrlochwandung und den ausgehärteten Bindemittelkern gedrückt, so daß sowohl ein Ausgleich der Bohrlocherweiterung als auch eine Verstärkung der Haltekraft eintritt. Durch die besondere Gestaltung sowohl der Patrone als auch der Ankerstange ist der erfindungsgemäße Verbundanker auch für Befestigungen in der Zugzone geeignet.

## Patentansprüche

1. Verbundanker, bestehend aus einer Ankerstange und einer mit den beiden Komponenten eines aushärtbaren Bindemittels gefüllten und zerstörbaren Patrone, wobei die eine Komponente ein mineralischer Mörtel und die andere Komponente Wasser mit viskositätserhöhenden Zusätzen ist, die beide durch einen ebenfalls zerstörbaren Innenbehälter voneinander getrennt sind und mittels der Ankerstange zu deren Befestigung im Bohrloch vermengt werden, **dadurch gekennzeichnet,** daß die Wasserkomponente (5) mit dem Zusatz amorpher, pyrogener Kieselsäure als Thixotropiermittel derart eingestellt ist, daß sie sich ohne Einwirkung von Scherkräften pastös verhält.

2. Verbundanker nach Anspruch 1, **dadurch gekennzeichnet,** daß das Thixotropiermittel der Wasserkomponente (5) mit einem Anteil von 0,5 % bis 10 %, vorzugsweise 0,5 % bis 2 %, zugemischt wird.

3. Verbundanker nach Anspruch 1, **dadurch gekennzeichnet,** daß die Wasserkomponente (5) im Innenbehälter (4) eingefüllt ist, der etwa der Länge des Innenraums der Patrone (3) entspricht.

4. Verbundanker nach Anspruch 1, **dadurch gekennzeichnet**, daß die Ankerstange (7) an ihrem dem Bohrloch zugewandten Ende einen zum Ende sich erweiternden Spreizkonus (10) aufweist und von einer mittels des Spreizkonus aufweitbaren Ankerhülse (11) umschlossen ist.

5. Verbundanker nach Anspruch 1, **dadurch gekennzeichnet**, daß das Thixotropiermittel amorphe, pyrogene Kieselsäure ist, die der Wasserkomponente (5) mit 0,5% bis 10% Anteil zugemischt wird.

## Claims

1. An anchor of composite form, comprising an anchoring rod and a crushable cartridge filled with the two components of a hardenable bonding agent, in which the one component is a mineral mortar and the other component is water with viscosity-increasing additives, both of which are separated from one another by a similarly crushable inner container and are mixed by means of the anchoring rod in order to fix the latter in the drilled hole, characterized in that the water component (5) is made up with the addition of amorphous, pyrogenic silicic acid as the thixotropic agent so that it is paste-like unless subjected to shear forces.

2. An anchor of composite form according to claim 1, characterized in that the thixotropic agent is admixed with the water component (5) in a proportion of 0.5 % to 10%, preferably 0.5 % to 2%.

3. An anchor of composite form according to claim 1, characterized in that the water component (5) fills the inner container (4) which corresponds approximately to the length of the inner space of the cartridge (3).

4. An anchor of composite form according to claim 1, characterized in that the anchoring rod (7), at its end facing the drilled hole, has an expander cone (10) widening towards the end and surrounded by an anchoring sleeve (11) that is expanded by means of the expander cone.

5. An anchor of composite form according to claim 1, characterized in that the thixotropic agent is amorphous, pyrogenic silicic acid which is admixed with the water component (5) in a proportion of 0.5 % to 10%.

## Revendications

1. Dispositif d'ancrage composite, constitué d'une tige d'ancrage et d'une cartouche qui est remplie des deux composants d'un liant durcisseur et peut être détruite, l'un des composants étant un ciment minéral et l'autre composant, de l'eau, avec des additifs accroissant la viscosité, les deux étant séparés l'un de l'autre par un récipient intérieur également destructible et se mélangeant au moyen de la tige d'ancrage pour sa fixation dans le trou percé, caractérisé par le fait que le composant eau (5) est, par l'additif acide silicique amorphe, pyrogéné, agissant en tant qu'agent thixotropique, traité de façon que, en l'absence d'intervention de forces de cisaillement, il reste pâteux.

2. Dispositif d'ancrage composite selon la revendication 1, caractérisé par le fait que l'on ajoute l'agent thixotropique au composant eau (5) dans une proportion de 0,5% à 10%, de préférence 0,5% à 2%, et qu'on l'y mélange.

3. Dispositif d'ancrage composite selon la revendication 1, caractérisé par le fait que l'on verse le composant eau (5) dans le récipient intérieur (4) qui correspond à peu près à la longueur de l'espace intérieur de la cartouche (3).

4. Dispositif d'ancrage composite selon la revendication 1, caractérisé par le fait qu'à son extrémité orientée vers le trou percé, la tige d'ancrage (7) présente un cône d'expansion (10) allant en s'élargissant vers l'extrémité et qu'elle est entourée d'une douille d'ancrage (11) qui peut s'élargir au moyen du cône d'expansion.

5. Dispositif d'ancrage composite selon la revendication 1, caractérisé par le fait que l'agent thixotropique est un acide silicique amorphe, pyrogéné, que l'on ajoute au et que l'on mélange avec le composant eau (5) dans une proportion de 0,5% à 10%.
